# EUROPEAN PATENT APPLICATION

(11) **EP 1 752 044 A2**
(43) Date of publication of application: **14.02.2007**
(21) Application number: 06118693.8
(22) Date of filing: 09.08.2006
(51) Int. Cl.: A01N 59/00, A01N 59/02, A01N 47/28, A01P 3/00

(54) **Process for controlling fungal diseases in grains and legumes with sodium chlorite solutions**

(30) Priority: 09.08.2005 US 200528
(71) Applicant: BI-OXIDE CROP SCIENCE LLC, Calhoun GA 30701 (US)
(72) Inventor: Westerman, Wilferd, Calhoun, Georgia 30703 (US)
(74) Representative: McCall, John Douglas

(57) **Abstract**

A technique for reducing fungal disease in growing grain-producing grasses and growing legume plants involves the generation of chlorine dioxide gas by dissolution of sodium chlorite with an activating acid in an aqueous solution, followed by foliar application of the gas to grasses or legume plants growing in fields. The most preferred acid solution contains urea sulphuric acid (monocarbamide dihydrogen sulphate).

## Description

### 1. Field of the Invention.

The present invention relates to the treatment and prevention of fungal diseases in field-grown grains and legumes. More particularly, the present invention relates to the treatment and prevention of fungal diseases by application of acid-activated sodium chlorite solution to growing wheat, other grain crops, soybean and other legume crops.

### 2. Background of the Invention.

Plant diseases caused by fungal organisms are responsible for the loss of yields in grains and legumes where the mature seed portion of the plant, e.g., the bean, wheat grain or corn kernel, is ultimately harvested. Despite significant scientific advances in fungicidal development in the last 50 years, many such fungal diseases in such plants remain partially or completely uncontrolled.

For example, and as more fully described in an online publication by R.W. Stack of the Plant Pathology Dept. North Dakota State Univ. entitled *Return of an Old Problem: Fusarium Head Blight of Small Grains* (www.aspnet.org/education/feature/FHB/), small grain crops such as wheat, rye and barely are susceptible to fusarium head blight, a disease which is increasing worldwide. In the U.S. and Canada, the Red River Valley of North Dakota, Minnesota and Manitoba has recently experienced six years of the disease. Infection spreads readily, in part because the spores are forcibly shot into the air, thereby increasing the dispersion of the fungus. Wheat, rye and barley are susceptible not only when the heads are flowering but also during later stages. During early stages of plant growth, the florets are killed so that no kernel develops. When infection occurs thereafter, florets are infected and bare partially developed and infected kernals, which appear "scabby". Infections occurring after kernels are filled may appear normal but carry the fungus and may contain mycotoxins. Wet environments particularly favor the spread and growth of fusarium head blight. While chemical control of the fungal disease by use of fungicide sprays are of interest, in North America it is reported that "the best fungicide applications may provide a 50-60% reduction in FHB with a concomitant reduction in damaged kernels." *Id.*

Other fungal diseases, in particular the different forms of rust, remain highly problematic. Indeed, Asian soybean rust *(Phakopsora pachyrhizi),* the presence of which was first confirmed in the continental U.S. in late 2004, is much in the news in the summer of 2005, as the seasonal tropical storms which annually impact the U.S. southeast from Florida and Mississippi northward, and then inland to the north central states, are predicted to cause further spread of Asian soybean rust. Soybean rust causes significant crop losses, with rust symptoms occurring five days or more after infection. When the rust pustules present on the underside of soybean leaves break, thousands of fungal spores are released into the air. An infected plant may produce 6,000,000 rust spores per day.

Other fungal rusts are especially problematic for wheat and other grains. For example, leaf rust, also known as brown rust, attacks leaves and spikes. Significant reduction in crop yield can occur. Black rust and stripe rust are also problematic. In some cases, complete crop loss can occur.

It is postulated that fungal diseases are difficult to eliminate and even control; this is due to the steep exponential growth of fungus generally through spore dispersion, as mentioned above, and also to the hard spore coverings protecting the spores from various environmental conditions and a number of fungicides. Additionally, the mode of growth of fungal diseases in grasses and legumes contributes to prevention and eradication difficulties. For many plant fungal diseases such as rust and wheat head blight, the fungal spores make the initial contact with foliage surfaces. The actual disease occurs when these surface spores germinate, undergoing morphological changes and developing tubes which enter the plant through its stomata, infecting the intracellular areas. These infections then spread throughout leaf, stem and flower tissues.

Thus, with respect to legumes, for example, the fungus not only grows on the foliar surfaces, but also spreads systemically. These portions of the fungal population which are not exposed to the surface are very difficult to eradicate. Intuitively, one might not expect a surface direct treatment to be highly effective against such fungal populations.

Headline® fungicide is a fungicide treatment registered to BASF Corporation under U.S. Environmental Protection Agency (EPA) Registration No. 7969-186. It is approved for use with various foodstuffs, including dry beans and grass grown for seed, barley, rye and wheat. The active ingredient is pyraclostrobin which is present in an equivalent of 2.09 pounds per gallon. The product includes petroleum distillates and is classified as a Group 11 fungicide. The Headline@ fungicide label includes a Resistance Management statement that "Fungal isolates resistant to group 11 fungicides, such as pyraclostrobin ... may eventually dominate the fungal population if group 11 fungicides are used predominantly and repeatedly in the same field in successive years as the primary method of control for the targeted pathogen species. This may result in reduction of disease control by Headline or other group 11 fungicides." The crop-specific restrictions and limitations for barley, rye, and wheat include a maximum rate per acre per application of 9 fluid ounces and a maximum number of applications per season of 2. Barley and rye must be treated no later than at 50% head emergence. Wheat must be treated by the end of flowering. Wheat cannot be harvested within 14 days of last application. The label contains crop-specific restrictions and limitations for dry beans (not including soy beans), but does list rusts as target diseases for dry beans and also for wheat.

After issuance of the Headline@ fungicide label, EPA Reg. No. 7969-186, a Technical Information Bulletin for Using Reduced Rates of Headline® Fungicide to Control Tan Spot on Wheat Grown in Minnesota, North Dakota or South Dakota was published in 2002. The Bulletin notes that for early season tan spot control, 3 fl. Oz per acre of Headline is recommended, in which case a second application is strongly recommended to protect the emerged flag leaf. The 2 application/season limit is reiterated in the Bulletin.

One antimicrobial agent that has long been used as a surface decontaminant is sodium chlorite. Sodium chlorite is a salt and when mixed in water to form a solution and when subjected to an acid, it will covert to chlorine dioxide. This activation technique is often utilized because chlorine dioxide gas can be explosive, and thus shipping of containers of chlorine dioxide gas is not preferred. The acid used for activation purposes can be either a mono- or multi-valent acid and be either in-organic or organic. Vulcan Chemicals (TDS 600-103) advises that the maximum theoretical conversion of sodium chlorite to chlorine dioxide following acid activation is 80%. In the presence of a mono-valent acid, such as hydrochloric acid, the following reaction is expected to occur:

5NaClO₂ + 4HCl ⇒ 4ClO₂(g) + 5NaCl + 2H₂O

with 5 moles of sodium chlorite required to generate 4 moles of chlorine dioxide. In the presence of a di-valent acid, such as sulfuric acid, the following reaction is expected to occur:

4NaClO₂ + H₂SO₄ ⇒ 2ClO₂(g) + NaCl + NaClO₃ +2NaSO₄ + H₂O

with 4 moles of sodium chlorite required to generate 2 moles of chlorine dioxide.

Hard surface sanitation is the primary use of chlorine dioxide applications. Hard surfaces in public places, (e.g., restaurant countertops), is one primary use for chlorine dioxide. Other widespread uses include surface and water treatment sanitation in animal confinement areas such as barns, poultry houses, boarding kennels and the like.

Aside from surface sanitation use on restaurant countertops and the like in public facilities, the EPA has approved the use of sodium chlorite for surface application to certain harvested vegetables and to certain seeds prior to planting. For example, sodium chlorite was approved in 1995 as a seed-soak treatment prior to planting and growing brassica, leafy vegetables and radishes. See 40 C.F.R. §180.1070. More recently in 2003, the EPA approved the use of chlorine dioxide on stored potatoes by acid activation of sodium chlorite to produce chlorine dioxide. Supplemental labeling of Purogene® for treatment of stored potatoes lists application rates of 200 and 400 parts per million (ppm) of sodium chlorite to stored potatoes to control late blight *(Phytophthora infestans).*

The U.S. Food and Drug Administration has also approved the uses of acidified sodium chlorite solutions as an antimicrobial agent in water to treat harvested fruits and vegetables. The approval is limited to application as dip or direct spray at concentrations of between 500 and 1,200 ppm when used with an approved acid at a level sufficient enough to achieve a solution pH of 2.3 to 2.9. See 21 C.F.R. §173.325.

Continuous chlorine dioxide gas treatments on fresh supermarket purchased strawberries has also been tested to determine the efficacy in reducing counts of *E. coli* O0157:H7 and *Listeria monocytogenes.* The strawberries were treated with chlorine dioxide produced by a generator using chlorine gas.

Thus it can be seen that there remains a need for a fungicide which prevents or substantially controls the spread of fungal diseases such as rust in growing grains such as wheat and in growing legumes such as soybeans. Preferably, the mode of action of such a fungicide should be such that fungal resistance is not expected. Also preferably, limitations on the number of applications or the timing of applications to a single crop should be minimized, so that if multiple fungal infestations or late season infestations occur, use of an effective fungicide is not precluded. Finally, a fungicide which doesn't require substantial amounts for effective treatment is preferred, for both economy of application and also risk of health hazards to workers which may increase with increases in concentration of chemical applications.

### SUMMARY OF THE INVENTION

The present invention relates to a method of reducing fungal disease in growing grain-producing grasses and growing legume plants. The method involves the generation of chlorine dioxide gas by dissolution of sodium chlorite with an activating acid in an aqueous solution and by foliar application of the gas to grasses or legume plants growing in fields. The most preferred acid solution contains urea sulphuric acid, also referred to as monocarbamide dihydrogen sulphate. In a most preferred embodiment of the technique of the present invention, the application rate of the chlorine dioxide effective ingredient of the present invention to control fungal diseases in growing grasses and legumes is at or less than 0.10 pounds per acre, with acceptable application rates or from 10 pounds to .005 pound per acre. The treatment method of the present invention is not expected to promote fungal resistance, as chlorine dioxide's mode of action involving oxidation, which occurs at multiple sites, is not limited to very particularized positions on one or more target enzymes.

### DETAILED DESCRIPTION

The present invention relates to a method of reducing fungal disease in growing grain-producing grasses and growing legume plants. The method involves the generation of chlorine dioxide gas by dissolution of sodium chlorite with an activating acid in an aqueous solution and by foliar application of the gas to grasses or legume plants growing in fields. The most preferred acid solution contains urea sulphuric acid, also referred to as monocarbamide dihydrogen sulphate. In a most preferred embodiment of the technique of the present invention, the application rate to control fungal diseases in growing grasses and legumes is at or less than 0.10 pounds per acre.

### EXAMPLE I

An aqueous solution containing 2.58 pounds of sodium chlorite per gallon is obtained from Vulcan Chemicals under its Technical Sodium Chlorite Solution 31.25 label. In order to achieve a 0.06 pound of active ingredient per acre application rate, a predetermined amount of the sodium chlorite solution was added to a spray tank partially filled with water. For each 3 fluid ounces of sodium chlorite solution added to the tank, 2 fluid ounces of concentrated urea sulfuric acid was added and the tank was then topped off with water. Foliar spray application to wheat then followed promptly.

### EXAMPLE II

A field fungicide test on spring wheat was conducted on acreage near Stratford, South Dakota, on which soybeans had been planted and harvested the previous year. After the spring wheat was planted, standard weed control herbicides were applied. Bronate® (bromoxynil―a product of Bayer CropScience) was applied to minimize growth of broadleaf weeds and Puma® (fenoxaprop-P-ethyl-a product of Aventis CropScience) was applied to minimize growth of wild oats and foxtail.

The sodium chlorite active ingredient solution to which the urea sulfuric acid activator was added in accordance with Example I was applied to selected acreage at a rate of 0.06 lbs. sodium chlorite active ingredient per acre. Headline® fungicide was applied to adjacent acreage at a rate of 6 fluid ounces, which is equivalent to 0.1 lb. active ingredient per acre, the recommended rate for the control of Tan Spot (*Pyrenphthora tritici-repents*)*.* Untreated plants in areas adjacent the Headline®-treated acreage received no fungicide treatment.

The fungicide treatments were applied two times during the growing season. The first application was made at flag leaf stage, when the wheat was 2 to 3 inches tall at flag leaf stage. The application was made to prevent rust diseases. The application was made using a ground rig at 10 gallon spray volume per acre using T-Jet 1005 nozzles.

The second application was made at the heading or flowering stage to prevent *Fusarium* head blight. This application was made with a Husky AgCat model monoplane at 4.6 gallon spray volume per acre, using standard nozzles to reduce drift. The aerial applications were made during early morning hours, following standard conditions to prevent spray drift. No applications were made when wind speeds were 10 mph or greater.

The Headline® fungicide treatment was prepared by addition of the Headline@ fungicide to a spray tank that was half full with water, after which the tank was topped off with water. Spray application followed.

Fungal disease pressure was observed during the course of the growing season in the untreated adjacent areas. Rust was observed at the flag leaf stage. *Fusarium* head blight was observed by the presence of white wheat. Spotting on foliage was also observed.

The spring wheat acreage treated with the Example I treatment out yielded the acreage treated with Headline® fungicide by from 5 to 8 bushels more of wheat per acre. The differences in yield were determined from the harvest combine yield monitor. The wheat plants treated with the Example I treatment were observed to have less spotting and to be 30 to 40% healthier and greener looking than the wheat plants treated with the Headline® fungicide treatment. At harvesting, the combine operators even commented that the plots that had been treated with the Example I fungicide looked better than the acreage treated with Headline@ fungicide. Indeed, white wheat heads, an indicator of *Fusarium* head blight, were found in the acreage treated with Headline® fungicide, but were not found in the acreage treated with the Example I fungicide.

### EXAMPLE III

A second field fungicide test the year following the treatments and harvest described in Example II, was conducted on spring wheat on the same acreage acreage near Stratford, South Dakota. As in Example II, after the wheat was planted, standard weed control herbicides were applied. Bronate® (bromoxynil―a product of Bayer CropScience) was applied to minimize growth of broadleaf weeds and Puma® (fenoxaprop-P-ethyl-a product of Aventis CropScience) was applied to minimize growth of wild oats and foxtail.

Application of the fungicide treatments was substantially the same as described in Example II above. Once again, in addition to the herbicide treatments, acreage was treated in one of three ways: (1) with the Example I fungicide, (2) with Headline® fungicide, or (3) with no fungicide. Fungal pressure was again observed on the untreated control plot, with spotting symptoms visible on plant foliage.

The yield differences reported in Example II above between the acreage treated with Headline@ fungicide and the acreage treated with the Example I fungicide was the same at 5 to 8 bushel increase per acre in the Example I acreage. However, white wheat heads were not found in any of the treated plots, indicating that there was very little if any *Fusarium* head blight pressure. There were no visual differences and no yield differences between acreage treated with the Headline@ fungicide and the untreated control plants, although both types of plants showed spotting and visual symptoms of fungal disease. Once again, plants in the acreage treated with the Example I fungicide appeared markedly healthier than the other plants.

It is noted that the increase in yield cannot be attributed to presence of the urea contributed by the urea sulfuric acid. At the application rate described in Example I, the urea sulfuric acid would be contributing only 0.046 pound of nitrogen per acre per growing season. In contrast, the Mississippi State University Extension Service recommends 90 to 140 pounds per acre as the spring nitrogen rate for wheat, although the rate may be lessened if there is a carryover of nitrogen from the previous crop. Although in the case of Example I, there would be expected to have substantial carryover of nitrogen from the previous year's soybean crop, cutting the recommended rate of 90 pounds per acre in half (to 45 pounds per acre), the amount of nitrogen in the urea used in Example 1 would not be expected to be fertilizer contributor enhancing the crop yield in any significant way.

In view of the agronomics of pesticide application, where application of the smallest effective amount has both cost-saving and environmental implications, the most preferred application rate presently known is 0.06 pound per acre of the sodium chlorite active ingredient. The efficacy in preventing and reducing fungal diseases in a growing crop at such a low application rate was quite surprising. It should be noted, however, that while sodium chlorite is an weak oxidizing agent, and the primary mode of action of the chemical reaction involved in the method of the present invention results from oxidation by the chlorine dioxide gas generated in the reaction, the imprecision necessarily present in calculating the percentage of sodium chlorite converted to chlorine dioxide, has resulted in a convention of identifying the active ingredient as the sodium chlorite, for purposes of application rate calculations.

While 0.06 pound per acre active ingredient is most preferred when practicing the present invention, preferred rates of application range from 0.04 to 0.08 pound per acre of the active ingredient of the present invention. Economical range of application rates of active ingredient range from 0.02 to 1 pound per acre. Acceptable results are expected to be achieved with application rates of from 0.005 to 10 pounds per acre of the active ingredient.

The most preferred acid activator used in the method of the present invention is urea sulfate. Other preferred acid activators include hydrochloric acid, nitric acid and sulfuric acid, as well as organic acids such as citric acid. Food grade acids are preferred.

It is noted that as with spring wheat, a majority of field grown grain and legume crops that are treated with post-emergence foliar fungicides typically use water as a carrier. The foliar application technique of the present invention utilizes solutions of sodium chlorite and an acid that are mixed together in water. This practice can be easily incorporated into existing crop protection practices for the treatment and prevention of foliar fungal diseases in grains and legumes. The present invention has particular utility in the prevention and control of foliar fungal diseases in wheat, milo, sorghum, corn, rye, barley, rice, oats, soybeans, peas, lima beans, green beans, fava beans, lentils, pinto beans, navy beans, adzuki beans, and the like.

While there have been described above the principles of the present invention in conjunction with specific compositions, application rates and crops, it is to be clearly understood that the foregoing description is made only by way of example and not as a limitation to the scope of the invention. Particularly, it is recognized that the teachings of the foregoing disclosure will suggest other modifications to those persons skilled in the relevant art. Such modifications may involve other features which are already known per se and which may be used instead of or in addition to features already described herein. Although claims have been formulated in this application to particular combinations of features, it should be understood that the scope of the disclosure herein also includes any novel feature or any novel combination of features disclosed either explicitly or implicitly or any generalization or modification thereof which would be apparent to persons skilled in the relevant art, whether or not such relates to the same invention as presently claimed in any claim and whether or not it mitigates any or all of the same technical problems as confronted by the present invention. The applicants hereby reserve the right to formulate new claims to such features and/or combinations of such features during the prosecution of the present application or of any further application derived therefrom.

## Claims

1. A method of reducing fungal disease in growing grain-producing grasses and growing legume plants comprising the steps of:
generating chlorine dioxide gas by reacting sodium chlorite in an aqueous solution with an acid dissolved therein; and
applying the chlorine dioxide gas or the solution containing the chlorine dioxide gas to a growing grass or a growing legume plant.

2. A method as claimed in claim 1, wherein the acid includes urea sulphuric acid.

3. A method as claimed in claim 1 or 2, wherein the growing grain-producing grass is selected from the group consisting of wheat, milo, sorghum, corn, rye, barley, rice and oats.

4. A method as claimed in claim 1 or claim 2, wherein the growing legume plant is selected from the group consisting of soybeans, peas, lima beans, green beans, lentils, fava beans, pinto beans, navy beans and adzuki beans.

5. A method as claimed in any one of the preceding claims, wherein the application rate of the sodium chlorite active ingredient is about 0.06 pound per acre.

6. A method as claimed in any one of claims 1 to 4, wherein the application rate of the sodium chlorite active ingredient is from 0.04 to 0.08 pound per acre.

7. A method as claimed in any one of claims 1 to 4, wherein the application rate of the sodium chlorite active ingredient is from 0.02 to 1 pound per acre.

8. A method as claimed in any one of claims I to 4, wherein the application rate of the sodium chlorite active ingredient is approximately from 0.005 to 10 pounds per acre.
